# EUROPEAN PATENT APPLICATION

(11) **EP 4 642 125 A1**
(43) Date of publication of application: **29.10.2025**
(21) Application number: 22968950.0
(22) Date of filing: 22.12.2022
(51) Int. Cl.: H04W 72/04

(54) **BEAM MANAGEMENT METHOD AND APPARATUS, AND READABLE STORAGE MEDIUM**

(71) Applicant: Beijing Xiaomi Mobile Software Co., Ltd., Beijing 100085 (CN)
(72) Inventor: ZHANG, Juan, Beijing 100085 (CN)
(74) Representative: Dehns Germany Partnerschaft mbB
(86) International application number: PCT/CN2022/141097
(87) International publication number: WO 2024/130654

(57) **Abstract**

The present disclosure provides a beam management method and apparatus, and a readable storage medium. The method comprises: at an initial access stage, receiving a reference signal transmitted by a network device at least once; and determining an uplink transmission beam according to at least one measurement result of the reference signal and the beam reciprocity. In the method of the present disclosure, at an initial access stage, a user equipment receives a reference signal transmitted by a network device, and performs measurement on the reference signal for multiple times. The user equipment can reasonably select or adjust an uplink transmission beam on the basis of the beam reciprocity in combination with every measurement result of the reference signal, so as to ensure that an appropriate uplink transmission beam is used to transmit information, thereby improving the success rate of the initial access process.

## Description

### FIELD

The present disclosure relates to the field of wireless communication technology, and in particular to a method and an apparatus for beam management and a readable storage medium.

### BACKGROUND

In a wireless communication system, a user equipment (UE) or a terminal may initiate an initial access process to communicate with a network device for services. The uplink information in the initial access process may include, for example, a random access preamble, scheduling transmission messages msg1 and msg3, etc.

In the initial access process of millimeter wave, there is the problem of inappropriate uplink transmission beam due to the rapid changes in the millimeter wave frequency band channel.

### SUMMARY

The present disclosure provides a method and an apparatus for beam management, and a readable storage medium.

In a first aspect, the present disclosure provides a method for beam management, and the method is performed by a user equipment and includes:
in an initial access phase, receiving a reference signal sent by a network device for at least once; and
determining an uplink transmission beam according to at least one measurement result of the reference signal and beam correspondence.

In the method of the present disclosure, in the initial access phase, the user equipment receives the reference signal sent by the network device, and performs measurement on the reference signal for a plurality of times. The user equipment can reasonably select or adjust the uplink transmission beam based on the beam correspondence in conjunction with each measurement result of the reference signal to ensure that an appropriate uplink transmission beam is used to send information, improving the success rate of the initial access process.

In some possible implementations, determining the uplink transmission beam according to the at least one measurement result of the reference signal and the beam correspondence includes:
measuring the reference signal at a first time-domain location, and in response to a first measurement result of the reference signal being greater than or equal to a corresponding threshold, determining the uplink transmission beam according to a downlink receiving beam of receiving the reference signal; and
obtaining a second measurement result by measuring the reference signal at a second time-domain location, and adjusting a beam parameter of the uplink transmission beam according to the second measurement result.

In some possible implementations, the initial access phase includes one of:
initial access for non-small data (non-SDT); or
random access for small data (RA-SDT).

In some possible implementations, the first time-domain location is before the user equipment sends msg1; and
the second time-domain location is after the user equipment receives a random access response sent by the network device.

In some possible implementations, the method further includes:
sending subsequent data based on the uplink transmission beam with the beam parameter adjusted.

In some possible implementations, the method further includes:
obtaining a third measurement result by measuring the reference signal at a third time-domain location after sending the msg3, adjusting the beam parameter of the uplink transmission beam according to the third measurement result, and sending the subsequent data based on the uplink transmission beam adjusted.

In some possible implementations, in a scenario where discontinuous reception (DRX) is configured:
the first time-domain location corresponds to a time-domain location for the user equipment to monitor paging in the initial access process; and
the second time-domain location corresponds to a time-domain location for monitoring the paging before sending msg3.

In some possible implementations, the method further includes:
adjusting the beam parameter of the uplink transmission beam according to a fourth measurement result obtained by measuring the reference signal in a paging monitoring process, and sending the subsequent data based on the uplink transmission beam adjusted.

In some possible implementations, the reference signal includes one of:
a first synchronization signal block (SSB); or
a channel state information reference signal (CSI-RS) having a quasi-co-location relationship with a first SSB.

In some possible implementations, the corresponding threshold of the reference signal is a first threshold.

In some possible implementations, the initial access phase includes one of:
uplink configured grant-small data transmission (CG-SDT) based on a physical uplink shared channel PUSCH.

In some possible implementations, the first time-domain location is before sending the CG-SDT.

In some possible implementations, in a scenario where DRX is configured, the first time-domain location corresponds to a time-domain location for monitoring paging before sending the CG-SDT.

In some possible implementations, the second time-domain location is after sending the CG-SDT, or
sending the subsequent data based on the uplink transmission beam with the beam parameter adjusted.

In some possible implementations, the reference signal includes one of:
a second SSB; or
a channel state information reference signal (CSI-RS) having a quasi-co-location relationship with a second SSB.

In some possible implementations, the corresponding threshold of the reference signal is a second threshold.

In some possible implementations, the beam parameter includes a beam width and/or a beam direction.

In a second aspect, the present disclosure provides a method for beam management, and the method is performed by a network device and includes:
in an initial access phase, sending a reference signal to a user equipment for at least once.

In the method of the present disclosure, the network device sends the reference signal for at least once so that the user equipment may perform a plurality of measurements when desired to achieve beam adjustment in the initial access phase.

In some possible implementations, sending the reference signal to the user equipment for at least once includes:
sending the reference signal to the user equipment at a fourth time-domain location and a fifth time-domain location, in which the fourth time-domain location corresponds to the first time-domain location, and the fifth time-domain location corresponds to the second time-domain location

In some possible implementations, the initial access phase includes one of:
initial access for non-small data (non-SDT); or
random access for small data (RA-SDT).

In some possible implementations, the first time-domain location is before the user equipment sends msg1; and
the second time-domain location is after the user equipment receives a random access response sent by the network device.

In some possible implementations, the method further includes:
sending the reference signal to the user equipment at a sixth time-domain location after receiving msg3 sent by the user equipment, the sixth time-domain location corresponding to the third time-domain location; and
receiving subsequent data sent by the user equipment.

In some possible implementations, in a scenario where DRX is configured for the user equipment:
the first time-domain location corresponds to a time-domain location for the user equipment to monitor paging in the initial access process; and
the second time-domain location corresponds to a time-domain location for the user equipment to monitor the paging before sending msg3.

In some possible implementations, the method further includes:
sending the reference signal to the user equipment in a paging scheduling process; and
receiving subsequent data sent by the user equipment.

In some possible implementations, the reference signal includes one of:
a first SSB; or
a CSI-RS having a quasi-co-location relationship with a first SSB.

In some possible implementations, the initial access phase includes the CG-SDT.

In some possible implementations, the first time-domain location is before the user equipment sends the CG-SDT, or
in a scenario where DRX is configured, the first time-domain location corresponds to a time-domain location for the user equipment to monitor paging before sending the CG-SDT.

In some possible implementations, the second time-domain location is after the user equipment sends the CG-SDT.

In some possible implementations, the reference signal includes one of:
a second SSB; or
a CSI-RS having a quasi-co-location relationship with a second SSB.

In a third aspect, the present disclosure provides an apparatus for beam management. The apparatus may be used to perform steps performed by the user equipment in the first aspect described above or in any of the possible designs of the first aspect. The user equipment may realize each of the functions of the methods described above in the form of a hardware structure, a software module, or a hardware structure plus a software module.

When the apparatus illustrated in the third aspect is implemented by the software module, the apparatus may include a transceiver module and a processing module coupled to each other, the transceiver module may be used to support the communication device for communication, and the processing module may be used for the communication device to perform a processing operation such as generating information/messages to be sent, or processing received signals to obtain information/messages.

When the steps of the first aspect are performed, a transceiver module is configured to receive a reference signal sent by a network device in an initial access phase for at least once; and
a processing module is configured to determine an uplink transmission beam according to at least one measurement result of the reference signal and beam correspondence.

In a fourth aspect, the present disclosure provides an apparatus for beam management, and the apparatus may be used to perform steps performed by the network device in the second aspect described above or in any of the possible designs of the second aspect. The network device may realize each of the functions of the methods described above in the form of a hardware structure, a software module, or a hardware structure plus a software module.

When the apparatus illustrated in the fourth aspect is implemented by the software module, the apparatus may include a transceiver module, in which the transceiver module may be used to support the communication device for communication.

When the steps of the second aspect are performed, the transceiver module is configured to send a reference signal to the user equipment in an initial access phase for at least once.

In a fifth aspect, the present disclosure provides a user equipment including a processor and a memory. The memory is used to store a computer program; and the processor is used to execute the computer program to implement the first aspect or any of the possible designs of the first aspect.

In a sixth aspect, the present disclosure provides a network device including a processor and a memory. The memory is used to store a computer program; and the processor is used to execute the computer program to implement the second aspect or any of the possible designs of the second aspect.

In a seventh aspect, the present disclosure provides a computer-readable storage medium storing instructions (or referred as to the computer program, a program) that, when invoked and executed on a computer, cause the computer to perform the first aspect described above, or any of the possible designs of the first aspect.

In an eighth aspect, the present disclosure provides a computer-readable storage medium storing instructions (or referred as to the computer program, a program) that, when invoked and executed on a computer, cause the computer to perform the second aspect described above, or any of the possible designs of the second aspect.

It should be understood that, the forgoing general description and the detailed description hereinafter are only illustrative and explanatory, and cannot limit the present disclosure.

### BRIEF DESCRIPTION OF THE DRAWINGS

The accompanying drawings illustrated herein are served to provide further understanding of embodiments of the present disclosure, and constitute a portion of the present application; and the illustrative embodiments of embodiments of the present disclosure and the illustration thereof are for purpose of explanation of embodiments of the present disclosure, rather than unduly limit the embodiments of the present disclosure. In which:

The accompanying drawings herein are incorporated into the specification and constitute a part of the specification. Theses accompanying drawings illustrate embodiments conform to embodiments of the present disclosure and are used to explain the principles of embodiments of the present disclosure together with the specification.
FIG. 1 is a schematic diagram of an architecture of a wireless communication system provided by an embodiment of the present disclosure;
FIG. 2 is an interaction flowchart of a method for beam management provided by an embodiment of the present disclosure;
FIG. 3 is a flowchart of a method for beam management illustrated according to an embodiment of the present disclosure;
FIG. 4 is a flowchart of another method for beam management illustrated according to an embodiment of the present disclosure;
FIG. 5 is a flowchart of another method for beam management illustrated according to an embodiment of the present disclosure;
FIG. 6 is a flowchart of another method for beam management illustrated according to an embodiment of the present disclosure;
FIG. 7 is a flowchart of another method for beam management illustrated according to an embodiment of the present disclosure;
FIG. 8 is a flowchart of a method for beam management illustrated according to an embodiment of the present disclosure;
FIG. 9 is a schematic diagram of an apparatus for beam management provided by an embodiment of the present disclosure;
FIG. 10 is a block diagram of a user equipment illustrated according to an illustrative embodiment;
FIG. 11 is a block diagram of an apparatus for beam management illustrated according to an illustrative embodiment; and
FIG. 12 is a block diagram of a network device illustrated according to an illustrative embodiment.

### DETAILED DESCRIPTION

Embodiments of the present disclosure are further described in connection with the accompanying drawings and specific implementations.

Illustrative embodiments will be illustrated in detail herein, and the examples thereof are illustrated in the accompanying drawings. When the following description refers to the accompanying drawings, unless otherwise specified, the same or similar elements are denoted by the same numerals in the different accompanying drawings. Implementations described in the illustrative embodiments do not represent all implementations consistent with embodiments of the present disclosure. On the contrary, they are merely examples of an apparatus and a method consistent with some aspects of the present disclosure, as elaborated in the appended claims.

The terms used in embodiments of the present disclosure are only for purpose of description of particular embodiments, and are not intended to limit embodiments of the present disclosure. The singular form "a" and "the" used in embodiments of the present disclosure and the appended claims is also intended to include the plural form, unless other meanings are explicitly expressed in the context. It should be understood that, the term "and/or" used herein refers to include any or all of the possible combinations of one or more listed related items.

It should be understood that, although the terms "first", "second", "third" may be employed by embodiments of the present disclosure to describe various information, these information should not limited by these terms. These terms are only used to distinguish the information of the same type from each other. For example, a first information may be referred to as a second information without departing from the scope of embodiments of the present disclosure, and similarly, the second information may also be referred to as the first information. Depending on the context, the word "if" used herein may be interpreted as "when...", "upon..." or "in response to determining that...".

Embodiments of the present disclosure will be described in detail and examples of the embodiments will be illustrated in the drawings, where same or similar reference numerals are used to indicate same or similar elements. The embodiments described herein with reference to drawings are illustrative, and used to generally explain the present disclosure. The embodiments shall not be construed to limit the present disclosure.

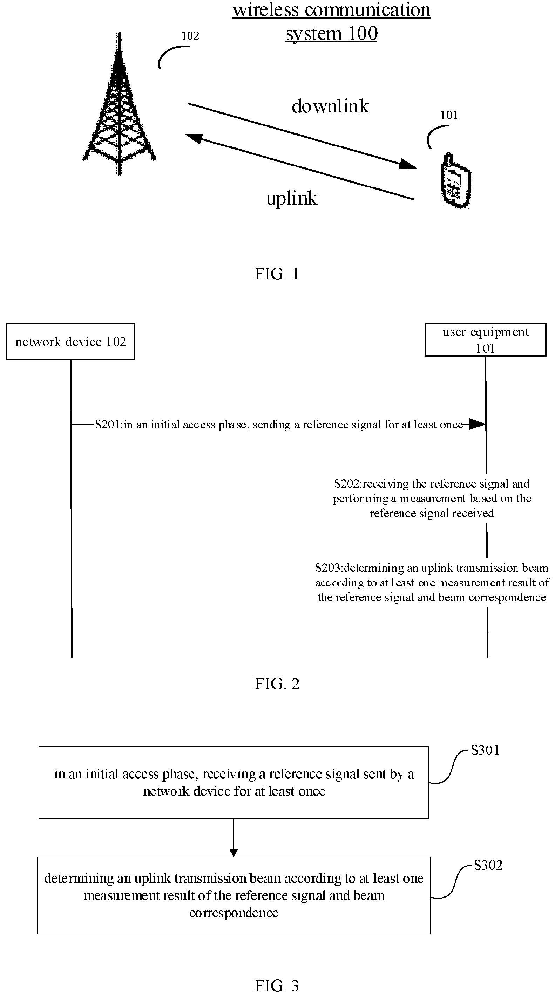

As illustrated in FIG. 1, embodiments of the present disclosure provide a method for beam management that may be applied to a wireless communication system 100, which may include a user equipment 101 and a network device 102. The user equipment 101 is configured to support carrier aggregation and may be connected to a plurality of carrier units of the network device 102, including a primary carrier unit and one or more secondary carrier units.

It should be understood that the above wireless communication system 100 may be suitable for both low-frequency scenario and high-frequency scenario. Application scenarios for wireless communication system 100 include, but are not limited to, long term evolution (LTE) systems, LTE frequency division duplex (FDD) systems, LTE time division duplex (TDD) systems, worldwide interoperability for micro wave access (WiMAX) communication systems, cloud radio access network (CRAN) systems, future fifth-generation (5G) systems, new radio (NR) communication systems, or future evolved public land mobile network (PLMN) systems.

The user equipment 101 illustrated above may be a terminal, an access terminal, a terminal unit, a terminal station, a mobile station (MS), a remote station, a remote terminal, a mobile terminal, a wireless communication device, a terminal agent, or a terminal device. The user equipment 101 may have a wireless transceiver function that enables it to communicate (e.g., wirelessly) with one or more network devices of the one or more communication systems and receive network services provided by the network devices, which herein include, but are not limited to, the network device 102, as illustrated.

The user equipment 101 may be a cellular telephone, a cordless telephone, a session initiation protocol (SIP) telephone, a wireless local loop (WLL) station, a personal digital assistant (PDA) device, a handheld device with a wireless communication capability, a computing device or other processing devices connected to wireless modems, an in-vehicle device, a wearable device, a terminal device in future 5G networks or in future evolved PLMN networks, etc.

The network device 102 may be an access network device (or access network site). The access network device refers to a device that has the function of providing network access, such as radio access network (RAN) base stations and so on. The network device 102 may specifically include a base station (BS), or include a base station and a wireless resource management device for controlling the base station, etc. The network device 102 may also include a relay station (relay device), an access point, and a base station in future 5G networks, a base station in future evolved PLMN networks, or a NR base station. The network device 102 may be a wearable device or an in-vehicle device. The network device 102 may also be a communication chip having a communication module.

For example, the network device 102 includes, but is not limited to, a next generation base station (gnodeB, gNB) in 5G, an evolved node B (eNB) in an LTE system, a radio network controller (RNC), a node B (NB) in a WCDMA system, a wireless controller in a CRAN system, a base station controller (BSC), a base transceiver station (BTS) in a GSM system or a CDMA system, a home base station (e.g., home evolved nodeB, or home node B, HNB), a baseband unit (BBU), a transmission and receiving point (TRP), transmitting point (TP), or mobile switching center.

In the related art, for the user equipment 101 in a radio resource control (RRC) connected state, beam tracking and beam fine-tuning can be performed according to the downlink channel state information-reference signal (CSI-RS), so that a more finely tuned and appropriate beam can be used for uplink transmission. However, in the initial access process, the user equipment 101 is not configured with a CSI-RS resource and therefore may perform beam selection only according to the synchronization signal block (SSB), but may not perform beam fine tuning.

Based on this situation, in the initial access process, the user equipment 101 generally needs to use the same transmission beam to send data, such as using the transmission beam of msg1 to send msg3. Due to the rapid changes in the millimeter wave frequency band channel, if the user equipment 101 continues to send msg3 using the transmission beam of msg1, it may result in a failure to send the data, which may cause the user equipment 101 to continually re-initiate the initial access.

Embodiments of the present disclosure provide a method for beam management, and FIG. 2 is a flowchart of a method for beam management illustrated according to an illustrative embodiment. As illustrated in FIG. 2, the method includes steps S201~S203, specifically as follows.

In step S201: in an initial access phase, the network device 102 sends a reference signal to a user equipment 101 for at least once.

In some possible implementations, the network device 102 may send the reference signal (RS) separately at different time-domain locations according to a set sending period T.

In some possible implementations, the reference signal may be a synchronization signal block (SSB), or a channel state information-reference signal (CSI-RS).

For example, in the initial access phase, the network device 102 configures an SSB resource for the user equipment 101 and broadcasts the SSB at a set period.

In step S202: the user equipment 101 receives the reference signal sent by the network device 102, and performs a measurement based on the reference signal received.

In some possible implementations, in the initial access process, the user equipment 101 is in an RRC idle state, or an RRC inactive state.

In some possible implementations, the user equipment 101 receives the reference signal sent by the network device 102 separately at a plurality of time-domain locations.

In some possible implementations, the user equipment 101 may, each time it receives the reference signal, measure a received signal strength indication (RSSI), reference signal received power (RSRP), or reference signal received quality (RSRQ) of the received reference signal, obtaining a measurement result corresponding to each measurement of the reference signal.

In step S203: the user equipment 101 determines an uplink transmission beam according to at least one measurement result of the reference signal and beam correspondence.

In some possible implementations, the user equipment 101 determines the uplink transmission beam, which may include the following two aspects:
determining or selecting the uplink transmission beam, and determining or adjusting the beam parameter of the uplink transmission beam (i.e., adjusting the uplink transmission beam). The beam parameter includes a beam direction and/or a beam width.

In some possible implementations, the user equipment 101 is a terminal supporting the beam correspondence.

In some possible implementations, the user equipment 101 supporting the beam correspondence may determine its own uplink transmission beam according to a downlink reception beam, or determine its own downlink reception beam according to the uplink transmission beam.

In an example, if the downlink reception beam A is a better/best choice for receiving a downlink signal, the user equipment 101 determines, based on the beam correspondence, that the uplink transmission beam A' corresponding to the downlink reception beam A is also a better/best uplink transmission beam.

In some possible implementations, the user equipment 101 may select or determine the downlink reception beam corresponding to the reference signal at this time when the measurement result satisfies a certain condition. Further, based on the beam correspondence, the uplink transmission beam corresponding to the downlink reception beam is determined.

In some possible implementations, the user equipment 101 may receive indication information sent by the network device 102, and the indication information is used to indicate a correspondence relationship of the reference signal and a UE downlink reception beam.

In an example, when the network device 102 sends the reference signal X, the user equipment 101 may be informed of the downlink reception beam A corresponding to the reference signal X according to the indication information, and therefore adopt the downlink reception beam A to receive the reference signal X. Based on the beam correspondence, the uplink transmission beam A' corresponding to the downlink reception beam A may be determined.

In some possible implementations, after determining the uplink transmission beam, the user equipment 101 may determine the beam parameter of the uplink transmission beam in conjunction with the other measurement results, i.e., making an adjustment to the uplink transmission beam to better send data.

In embodiments of the present disclosure, in an initial access phase, the user equipment 101 receives a reference signal sent by the network device 102, and performs the measurement on the reference signal for a plurality of times. The user equipment 101 can reasonably select or adjust the uplink transmission beam based on the beam correspondence in conjunction with each measurement result of the reference signal to ensure that an appropriate uplink transmission beam is used to send information, improving the success rate of the initial access process and preventing the user equipment 101 from continually initiating the initial access.

Embodiments of the present disclosure provide a method for beam management, and the method is performed by the user equipment 101. FIG. 3 is a flowchart of a method for beam management illustrated according to an illustrative embodiment; and as illustrated in FIG. 3, the method includes steps S301~S302, specifically as follows.

In step S301: in an initial access phase, the user equipment 101 receives a reference signal sent by a network device 102 for at least once.

In some possible implementations, the initial access phase may be initiated by the user equipment 101.

For example, the initial access phase includes a random access (RA) process, and in the RA process, the user equipment 101 and the network device 102 will perform signaling interaction. For example, in the 2-step random access process, the user equipment 101 sends msgA to the network device 102 and receives msgB sent by the network device 102. For another example, in the 4-step random access process, the user equipment 101 sends msg1 and msg3 to the network device 102 and receives msg2 and msg4 sent by the network device 102.

In some possible implementations, in the initial access process, the user equipment 101 is in an RRC idle state, or an RRC inactive state.

In some possible implementations, the network device 102 may send the reference signal separately at different time-domain locations according to a set sending period T. In a measurement scenario, the user equipment 101 may receive the reference signal at a plurality of time-domain locations, i.e., receiving the reference signal for a plurality of times.

In some possible implementations, the user equipment 101 may, each time it receives the reference signal, measure a RSSI, a RSRP, or a RSRQ of the received reference signal, obtaining a measurement result corresponding to each measurement of the reference signal.

In step S302: the user equipment 101 determines an uplink transmission beam according to at lest one measurement result of the reference signal and beam correspondence.

In some possible implementations, the user equipment 101 determines the uplink transmission beam, which may include the following two aspects:
determining or selecting the uplink transmission beam, and determining or adjusting the beam parameter of the uplink transmission beam (i.e., adjustment of the uplink transmission beam). The beam parameter includes a beam direction and/or a beam width.

In some possible implementations, the user equipment 101 supporting the beam correspondence may determine its own uplink transmission beam according to a downlink reception beam, or determine its own downlink reception beam according to the uplink transmission beam.

In some possible implementations, after determining the uplink transmission beam, the user equipment 101 may determine the beam parameter of the uplink transmission beam in conjunction with the other measurement results, i.e., making an adjustment to the uplink transmission beam to better send data.

In embodiments of the present disclosure, in an initial access phase, the user equipment 101 receives the reference signal sent by the network device 102, and performs the measurement on the reference signal for a plurality of times. The user equipment 101 can reasonably select or adjust the uplink transmission beam based on the beam correspondence in conjunction with the each measurement result of the reference signal to ensure that an appropriate uplink transmission beam is used to send information, improving the success rate of the initial access process and preventing the user equipment 101 from continually initiating the initial access.

Embodiments of the present disclosure provide a method for beam management, and the method is performed by the user equipment 101. The method includes steps S301~S303, specifically as follows.

In step S301: in an initial access phase, the user equipment 101 receives a reference signal sent by a network device 102 for at least once.

In step S302, the user equipment 101 measures the reference signal at a first time-domain location, and in response to a first measurement result of the reference signal being greater than or equal to a corresponding threshold, determines the uplink transmission beam according to a downlink reception beam of receiving the reference signal.

In some possible implementations, the first measurement result is used to represent a measurement result greater than or equal to the corresponding threshold of the reference signal, which may be a measurement result of a first measurement of the reference signal or a measurement result of an N^{th} measurement of the reference signal.

In some possible implementations, the user equipment 101 determines the uplink transmission beam in conjunction with the measurement result of the reference signal and the corresponding threshold of the reference signal.

In an example, the uplink transmission beam determined is used to send msg1.

In some possible implementations, there may be different implementations of the first time-domain location, the reference signal, and the corresponding threshold of the reference signal in conjunction with different Small Data Transmission (SDT) manners or scenarios of the user equipment 101, as can be seen in the descriptions of the following embodiments.

In an example, the manner of the SDT may include one of:
initial access for non-small data (non-SDT), random access for small data (RA-SDT), configured grant-small data transmission (CG-SDT) based on a physical uplink shared channel (PUSCH).

In some possible implementations, there may be different implementations of the first time-domain location, the reference signal, and the corresponding threshold of the reference signal in conjunction with whether discontinuous reception (DRX) is configured for the user equipment 101, as can be seen in the descriptions of the following embodiments.

In step S303, the user equipment 101 obtains a second measurement result by measuring the reference signal at a second time-domain location, and adjusts a beam parameter of the uplink transmission beam according to the second measurement result.

In some possible implementations, the second time-domain location is after the first time-domain location. The second measurement result may be the most recent measurement result after the first measurement result, or may be a certain measurement result after the first measurement result.

In some possible implementations, in conjunction with the measurement of the second time-domain location, the uplink transmission beam determined in step S302 may be adjusted, i.e., a beam parameter of the uplink transmission beam may be determined or adjusted.

In some possible implementations, the beam parameter includes a beam width and/or a beam direction.

In some possible implementations, there may be different implementations of the second time-domain location in conjunction with different SDT manners or scenarios of the user equipment 101, as can be seen in the descriptions of the following embodiments.

In some possible implementations, there may be different implementations of the second time-domain location in conjunction with whether DRX is configured for the user equipment 101, as can be seen in the descriptions of the following embodiments.

In an embodiment of the present disclosure, the user equipment 101 performs the measurement on the reference signal for a plurality of times, determines an uplink transmission beam in conjunction with the first measurement result, and may adjust the beam parameter of the uplink transmission beam in conjunction with the second measurement result, realizing fine-tuning of the beam in the initial access phase and preventing the user equipment 101 from continually re-initiating the initial access.

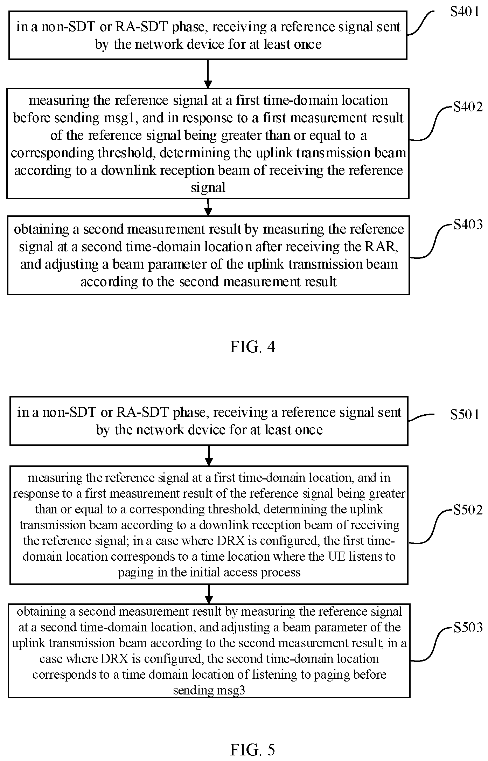

Embodiments of the present disclosure provide a method for beam management, and the method is performed by the user equipment 101. FIG. 4 is a flowchart of a method for beam management illustrated according to an illustrative embodiment; and as illustrated in FIG. 4, the method includes steps S401~S403, specifically as follows.

In step S401: in the non-SDT or RA-SDT phase, the user equipment 101 receives a reference signal sent by the network device 102 for at least once.

That is, in embodiments of the present disclosure, the initial access phase includes one of: initial access for non-small data (non-SDT), or random access for small data (RA-SDT). RA-SDT is an uplink small data transmission based on random access channel (RACH) mechanism.

In some possible implementations, in non-SDT or RA-SDT, the user equipment 101 may send non-small data or small data to the network device 102. For example, small data is sent through msg3.

In step S402, the user equipment 101 measures the reference signal at a first time-domain location before sending msg1, and in response to a first measurement result of the reference signal being greater than or equal to a corresponding threshold, determines the uplink transmission beam according to a downlink reception beam of receiving the reference signal.

That is, in embodiments of the present disclosure, the first time-domain location is before the user equipment sends msg1; and the second time-domain location is after the user equipment receives the random access response (RAR) sent by the network device.

In some possible implementations, the reference signal is a first synchronized signal block (SSB), i.e., the user equipment 101 receives and measures the first SSB to obtain a first measurement result.

In some possible implementations, the corresponding threshold of the reference signal is a first threshold. For example, in the case of measuring the RSRP of the first SSB, the first threshold may represent the first threshold RSRP1 of the RSRP.

In some possible implementations, before the user equipment 101 sends msg1, if the first measurement result satisfies a corresponding first threshold, the uplink transmission beam may be determined based on the downlink reception beam of receiving the reference signal and the beam correspondence. The uplink transmission beam is employed to send msg1, e.g., the preamble, to the network device 102.

In some possible implementations, the network device 102 may employ a beam of the associated reference signal to send the RAR to the user equipment 101 when it detects the preamble on a physical random access channel (PRACH) resource.

In step S403, the user equipment 101 obtains a second measurement result by measuring the reference signal at a second time-domain location after receiving the RAR, and adjusts a beam parameter of the uplink transmission beam according to the second measurement result.

In some possible implementations, when the user equipment 101 receives the RAR sent by the network device 102, the reference signal may be measured again at the second time-domain location to obtain the second measurement result.

In some possible implementations, the reference signal includes one of:
a first synchronization signal block (SSB); or
a channel state information reference signal (CSI-RS) having a quasi-co-location relationship with a first SSB.

The quasi co-location (QCL) relationship of the CSI-RS with the first SSB may be of type D (QCL-D), and they may have the same spatial reception parameter. For example, the first SSB and the CSI-RS having a QCL-D relationship with the first SSB correspond to the same UE downlink reception beam.

In some possible implementations, the user equipment 101, according to the second measurement result, may be informed whether the direction or angle at which the network device 102 sends the reference signal is adjusted or fine-tuned. Thus, the user equipment 101, in conjunction with the second measurement result, adjusts the beam parameter of the uplink transmission beam determined by the first measurement result, to correspond more to a sending situation of the network device 102.

The user equipment 101 sends msg3 using an uplink transmission beam after adjustment of the beam parameter, to improve success rate of sending msg3.

In some possible implementations, the beam parameter includes a beam width and/or a beam direction.

In embodiments of the present disclosure, in a scenario of non-SDT or RA-SDT, the user equipment 101 may determine the uplink transmission beam of sending msg1 by the measurement of the reference signal, and adjust the uplink transmission beam by another measurement, to send msg3. Thus, the beam fine-tuning is realized through a plurality of measurements of the reference signal, to improve the success rate of sending msg3 and prevent the user equipment 101 from continually initiating the initial access.

Embodiments of the present disclosure provide a method for beam management, and the method is performed by the user equipment 101. The method includes steps S401~S404, specifically as follows.

In step S401: in a non-SDT or RA-SDT phase, the user equipment 101 receives a reference signal sent by the network device 102 for at least once.

In step S402, the user equipment 101 measures the reference signal at a first time-domain location before sending msg1, and in response to a first measurement result of the reference signal being greater than or equal to a corresponding threshold, determines the uplink transmission beam according to a downlink reception beam of receiving the reference signal.

In step S403, the user equipment 101 obtains a second measurement result by measuring the reference signal at a second time-domain location after receiving the RAR, and adjusts a beam parameter of the uplink transmission beam according to the second measurement result.

In step S404, the user equipment 101 sends subsequent data based on the uplink transmission beam with the beam parameter adjusted.

The embodiments of the present disclosure may be implemented with reference to the description of the preceding embodiments, such as with reference to the implementations of steps S401 to S403.

In some possible implementations, the sending phase of the subsequent data is between: the receipt by the user equipment 101 of an acknowledgement information from the network device 102 of the initial data in the initial access process, and the receipt of a connection release message sent by the network device 102. In the sending phase, the user equipment 101 may perform uplink data transmission and downlink data reception, and the data sent in the phase is the subsequent data. For example, the subsequent data includes PUSCH information.

In some possible embodiments, in conjunction with the description of the preceding embodiments, the uplink transmission beam with the beam parameter adjusted is also used to send msg3. That is, the same beam as sending send msg3 can be used to send the subsequent data.

The beam parameter includes a beam width and/or a beam direction.

In the present implementation, the network device 102 may receive the subsequent data using the same beam as receiving msg3.

In embodiments of the present disclosure, for the sending of subsequent data, the user equipment 101 may use the same beam as sending msg3, i.e., the uplink transmission beam after adjustment of the beam parameter, to improve the success rate of the sending of the msg3 and at the same time effectively ensure the success rate of the sending of subsequent data.

Embodiments of the present disclosure provide a method for beam management, and the method is performed by the user equipment 101. The method includes steps S401~S403 and S405, specifically as follows.

In step S401: in a non-SDT or RA-SDT phase, the user equipment 101 receives a reference signal sent by the network device 102 for at least once.

In step S402, the user equipment 101 measures the reference signal at a first time-domain location before sending msg1, and in response to a first measurement result of the reference signal being greater than or equal to a corresponding threshold, determines the uplink transmission beam according to a downlink reception beam of receiving the reference signal.

In step S403, the user equipment 101 obtains a second measurement result by measuring the reference signal at a second time-domain location after receiving the RAR, and adjusts a beam parameter of the uplink transmission beam according to the second measurement result.

In step S405, the user equipment 101 obtains a third measurement result by measuring the reference signal at a third time-domain location after sending msg3, adjusts the beam parameter of the uplink transmission beam according to the third measurement result, and sends the subsequent data based on the uplink transmission beam adjusted.

The embodiments of the present disclosure may be implemented with reference to the description of the preceding embodiments, such as with reference to the implementations of steps S401 to S404.

In some possible implementations, the adjustment of the beam parameter performed by the user equipment 101 according to the third measurement result may be an adjustment of the uplink transmission beam in step S402, i.e., the adjustment of the beam parameter is performed on the uplink transmission beam used to send msg1.

In some possible implementations, the adjustment of the beam parameter performed by the user equipment 101 according to the third measurement result may also be an adjustment of the beam parameter performed again on the uplink transmission beam after one adjustment of the beam parameter in step S403. That is, the uplink transmission beam used to send msg1 is subjected to two adjustments of the parameter.

The beam parameter includes a beam width and/or a beam direction.

In some possible implementations, the third time-domain location is after the second time-domain location.

In some possible implementations, when performing the measurement of the reference signal, the reference signal includes one of:
a first SSB, or
a CSI-RS having a quasi-co-location relationship with a first SSB.

In embodiments of the present disclosure, for the sending of subsequent data, the user equipment 101 may again perform the measurement of the reference signal, and according to the third measurement result of the measurement, perform the adjustment of the beam parameter on the uplink transmission beam of sending msg1, or perform the adjustment of the beam parameter again based on the uplink transmission beam of sending msg3. Thus, the beam adjustment in the initial access process may be realized, and the success rate of sending the subsequent data may be effectively ensured.

Embodiments of the present disclosure provide a method for beam management, and the method is performed by the user equipment 101. FIG. 5 is a flowchart of a method for beam management illustrated according to an illustrative embodiment; and as illustrated in FIG. 5, the method includes steps S501~S503, specifically as follows.

In step S501: in a non-SDT or RA-SDT phase, the user equipment 101 receives a reference signal sent by the network device 102 for at least once.

In step S502, the user equipment 101 measures the reference signal at a first time-domain location, and in response to a first measurement result of the reference signal being greater than or equal to a corresponding threshold, determines the uplink transmission beam according to a downlink reception beam of receiving the reference signal. In a scenario where DRX is configured, the first time-domain location corresponds to a time-domain location for the user equipment 101 to monitor paging in the initial access process.

In some possible implementations, in a scenario where DRX is configured, the user equipment 101 will continue to monitor the paging in the initial access process.

Embodiments of the present disclosure are intended to illustrate that the first time-domain location is within a time period of monitoring the paging, i.e., while in a paging monitoring state in the initial access phase, the user equipment 101 simultaneously performs the measurement of the reference signal. Embodiments of the present disclosure do not limit the first time-domain location to a particular time-domain location.

In some possible implementations, the reference signal is a first SSB, i.e., the user equipment 101 receives and measures the first SSB to obtain a first measurement result.

In some possible implementations, the corresponding threshold of the reference signal is a first threshold. For example, in the case of measuring the RSRP of the first SSB, the first threshold may represent the first threshold RSRP1 of the RSRP.

In some possible implementations, if the first measurement result satisfies a corresponding first threshold, the uplink transmission beam may be determined based on the downlink reception beam of receiving the reference signal and the beam correspondence.

In step S503, the user equipment 101 obtains a second measurement result by measuring the reference signal at a second time-domain location, and adjusts a beam parameter of the uplink transmission beam according to the second measurement result. In a scenario where DRX is configured, the second time-domain location corresponds to a time-domain location for monitoring the paging before sending msg3.

In some possible implementations, the second time-domain location is after the first time-domain location. The second time-domain location remains a time-domain location when the user equipment 101 is in the paging monitoring state. That is, the user equipment 101, while in the process of monitoring the paging, simultaneously performs the measurement of the reference signal again at the second time-domain location to obtain the second measurement result.

In some possible implementations, the reference signal includes one of:
a first SSB; or
a CSI-RS having a quasi-co-location relationship with a first SSB.

In some possible implementations, the user equipment 101, according to the second measurement result, adjusts the beam parameter of the uplink transmission beam determined by the first measurement result, to correspond more to a sending situation of the network device 102.

The beam parameter includes a beam width and/or a beam direction.

In some possible implementations, the uplink transmission beam after adjustment of the beam parameter may be used to send msg3, to improve success rate of sending msg3.

In embodiments of the present disclosure, in a scenario where DRX is configured for the user equipment 101 and the initial access phase is non-SDT or RA-SDT, the user equipment 101 may perform a measurement of the reference signal in the process of monitoring the paging, determine the uplink transmission beam according to the first measurement result, and adjust the beam parameter of the uplink transmission beam according to the second measurement result to send msg3. Thus, the beam fine-tuning is realized through a plurality of measurements of the reference signal, to improve the success rate of sending msg3 and prevent the user equipment 101 from continually initiating the initial access.

Embodiments of the present disclosure provide a method for beam management, and the method is performed by the user equipment 101. The method includes steps S501~S504, specifically as follows.

In step S501: in a non-SDT or RA-SDT phase, the user equipment 101 receives a reference signal sent by the network device 102 for at least once.

In step S502, the user equipment 101 measures the reference signal at a first time-domain location, and in response to a first measurement result of the reference signal being greater than or equal to a corresponding threshold, determines the uplink transmission beam according to a downlink reception beam of receiving the reference signal. In a scenario where DRX is configured, the first time-domain location corresponds to a time-domain location for the user equipment 101 to monitor paging in the initial access process.

In step S503, the user equipment 101 obtains a second measurement result by measuring the reference signal at a second time-domain location, and adjusts a beam parameter of the uplink transmission beam according to the second measurement result. In a scenario where DRX is configured, the second time-domain location corresponds to a time-domain location for monitoring the paging before sending msg3.

In step S504, the user equipment 101 adjusts the beam parameter of the uplink transmission beam according to a fourth measurement result obtained by measuring the reference signal in a paging monitoring process, and sends the subsequent data based on the uplink transmission beam adjusted.

In some possible implementations, in a scenario where DRX is configured, the user equipment 101 will continue to monitor the paging in the initial access process.

In some possible implementations, for the sending of subsequent data, the same beam as sending msg3 may be used directly.

In some possible implementations, the adjustment of the beam parameter performed by the user equipment 101 according to the fourth measurement result may be an adjustment of the uplink transmission beam determined in step S502.

In some possible implementations, the adjustment of the beam parameter performed by the user equipment 101 according to the fourth measurement result may be an adjustment of the beam parameter performed again on the uplink transmission beam after one adjustment in step S503. That is, the uplink transmission beam is subjected to two adjustments of the parameter.

The beam parameter includes a beam width and/or a beam direction.

In embodiments of the present disclosure, in a scenario where DRX is configured, for the sending of subsequent data of non-SDT or RA-SDT, the user equipment 101 may perform the measurement of the reference signal in the process of monitoring the paging for a plurality of times, and perform the adjustment of the beam parameter of the uplink transmission beam according to the measurement result, such as the fourth measurement result, to realize beam adjustment in the initial access process and effectively ensure the success rate of sending the subsequent data.

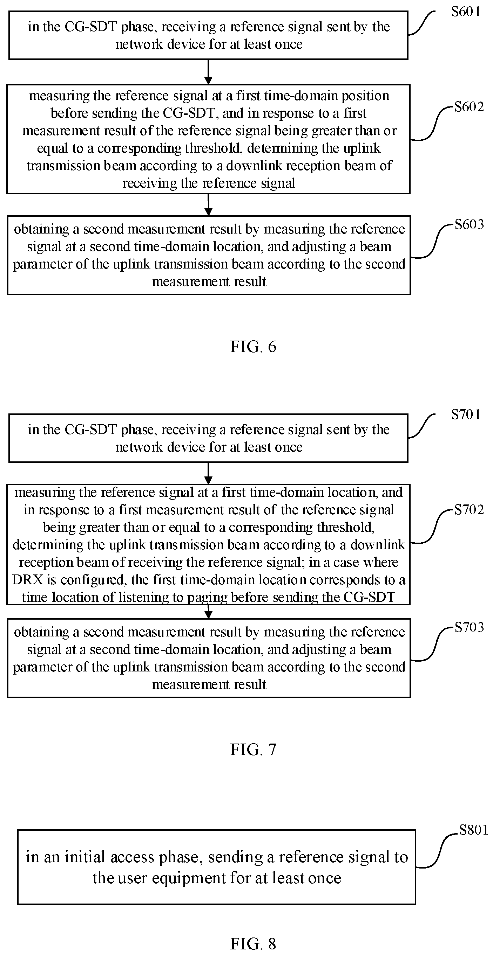

Embodiments of the present disclosure provide a method for beam management, and the method is performed by the user equipment 101. FIG. 6 is a flowchart of a method for beam management illustrated according to an illustrative embodiment; and as illustrated in FIG. 6, the method includes steps S601~S602, or steps S601~S603, specifically as follows.

In step S601: in the CG-SDT phase, the user equipment 101 receives a reference signal sent by the network device 102 for at least once.

That is, in embodiments of the present disclosure, the initial access phase includes uplink configured grant-small data transmission (CG-SDT) based on a physical uplink shared channel (PUSCH). In CG-SDT, the user equipment 101 may send small data through a PUSCH (e.g., CG) resource configured by the network device 102.

In step S602, the user equipment 101 measures the reference signal at a first time-domain location before sending the CG-SDT, and in response to a first measurement result of the reference signal being greater than or equal to a corresponding threshold, determines the uplink transmission beam according to a downlink reception beam of receiving the reference signal.

In some possible implementations, the reference signal includes one of:
a second SSB; or
a CSI-RS having a quasi-co-location relationship with a second SSB. The CSI-RS may have a QCL-D relationship with the second SSB.

In some possible implementations, the corresponding threshold of the reference signal is a second threshold. For example, in the case of measuring the RSRP of the second SSB, the second threshold may represent the second threshold RSRP2 of the RSRP.

In some possible implementations, for the same reference signal, its second threshold may be greater than the first threshold. For example, RSRP2 > RSRP1.

In some implementations, the user equipment 101 measures the second SSB or the CSI-RS having a QCL-D relationship with the second SSB, to obtain the first measurement result. In a case where the first measurement result is greater than or equal to the second threshold, the user equipment 101 may determine the uplink transmission beam based on the downlink reception beam of receiving the reference signal and the beam correspondence, to send CG-SDT.

It is worth noting that after determining the uplink transmission beam, the CG-SDT can be sent using the uplink transmission beam. For example, when the reference signal is the second SSB, step S603 may be selectively performed, to perform beam adjustment using a plurality of measurements. For another example, in the case where the reference signal is a CSI-RS having a QCL-D relationship with the second SSB, the fine tuning of the beam may be performed according to the measurement result of the CSI-RS, and thus it is also possible to choose not to perform step S603.

In step S603, the user equipment 101 obtains a second measurement result by measuring the reference signal at a second time-domain location, and adjusts a beam parameter of the uplink transmission beam according to the second measurement result.

The second time-domain location is after the first time-domain location. For example, the second time-domain location is after sending the CG-SDT.

In some implementations, the user equipment 101 measures the second SSB or the CSI-RS having a QCL-D relationship with the second SSB again at the second time-domain location, to obtain the second measurement result.

In some possible implementations, the user equipment 101, according to the second measurement result, adjusts the beam parameter of the uplink transmission beam determined by the first measurement result, to correspond more to a sending situation of the network device 102, improving the success rate of sending the data.

The beam parameter includes a beam width and/or a beam direction.

In embodiments of the present disclosure, in a scenario of CG-SDT, the user equipment 101 may adjust the beam parameter of the selected uplink transmission beam through the plurality of measurements of the reference signal, which can both improve the success rate of sending the data and prevent the user equipment 101 from continually initiating the initial access.

Embodiments of the present disclosure provide a method for beam management, and the method is performed by the user equipment 101. The method includes steps S601~S604, specifically as follows.

In step S601: in the CG-SDT phase, the user equipment 101 receives a reference signal sent by the network device 102 for at least once.

In step S602, the user equipment 101 measures the reference signal at a first time-domain location before sending the CG-SDT, and in response to a first measurement result of the reference signal being greater than or equal to a corresponding threshold, determines the uplink transmission beam according to a downlink reception beam of receiving the reference signal.

In step S603, the user equipment 101 obtains a second measurement result by measuring the reference signal at a second time-domain location, and adjusts a beam parameter of the uplink transmission beam according to the second measurement result.

In some possible implementations, the second time-domain location may be after sending the CG-SDT.

In some possible implementations, when the method does not include step S604, in the sending phase of the subsequent data of the CG-SDT, the user equipment 101 may send the subsequent data using the uplink transmission beam of step S602 or S603, i.e., sending the subsequent data using the same beam as sending the CG-SDT.

In step S604, the user equipment 101 sends the subsequent data based on the uplink transmission beam with the beam parameter adjusted.

The embodiments of the present disclosure may be implemented with reference to the description of the preceding embodiments.

In some possible implementations, the uplink transmission beam with the beam parameter adjusted may refer to a beam after adjusting the uplink transmission beam in step S602. Alternatively, in conjunction with the description of the preceding embodiments, it may be an uplink transmission beam after beam fine-tuning based on the measurement result of the CSI-RS. Alternatively, it is also possible to adjust the beam again after one adjustment in step S603.

In some possible implementations, in step S604, the user equipment 101 may also perform the measurement again in the manner of step S603, adjust the beam involved in step S602 or S603 according to a new measurement result, and then send the subsequent data.

In embodiments of the present disclosure, in a scenario of CG-SDT, the user equipment 101 may perform the sending of the subsequent data in a variety of ways: for example, a plurality of measurements of the reference signal may be performed, and the measurement result may be used to adjust the beam parameter; and for another example, it may also use the same beam as sending the CG-SDT. The beam adjustment in the CG-SDT phase is realized to prevent the user equipment 101 from continually initiating the initial access.

Embodiments of the present disclosure provide a method for beam management, and the method is performed by the user equipment 101. FIG. 7 is a flowchart of a method for beam management illustrated according to an illustrative embodiment; and as illustrated in FIG. 7, the method includes steps S701~S702, or steps S701~S703, specifically as follows.

In step S701: in the CG-SDT phase, the user equipment 101 receives a reference signal sent by the network device 102 for at least once.

In step S702, the user equipment 101 measures the reference signal at a first time-domain location, and in response to a first measurement result of the reference signal being greater than or equal to a corresponding threshold, determines the uplink transmission beam according to a downlink reception beam of receiving the reference signal. In a scenario where DRX is configured, the first time-domain location corresponds to a time-domain location for monitoring paging before sending the CG-SDT.

In some possible implementations, in a scenario where DRX is configured, the user equipment 101 will continue to monitor the paging in the initial access process.

Embodiments of the present disclosure are intended to illustrate that the first time-domain location is within a time period of monitoring the paging, i.e., while in a paging monitoring state in the CG-SDT phase, the user equipment 101 simultaneously performs the measurement of the reference signal.

In some implementations, the reference signal is the second SSB or the CSI-RS having a QCL-D relationship with the second SSB. The user equipment 101 receives and measures the reference signal to obtain the first measurement result, and the first measurement result is greater than or equal to the second threshold.

In some possible implementations, the user equipment 101 determines the uplink transmission beam based on the downlink reception beam of receiving the reference signal and the beam correspondence.

In some possible implementations, in a case where the reference signal is the second SSB, the user equipment 101 may employ the uplink transmission beam to send the CG-SDT and the subsequent data. It is also possible that after S703 is performed, the uplink transmission beam is adjusted, and then the CG-SDT and subsequent data are sent.

In some implementations, in a case where the reference signal is the CSI-RS having a QCL-D relationship with the second SSB, the user equipment 101 may obtain the uplink transmission beam and perform fine tuning of the beam, to send the CG-SDT and the subsequent data. Step S703 may selectively not be performed at this time.

In step S703, the user equipment 101 obtains a second measurement result by measuring the reference signal at a second time-domain location, and adjusts a beam parameter of the uplink transmission beam according to the second measurement result.

In some possible implementations, the second time-domain location is after the first time-domain location, and in a scenario where the DRX is configured, the time-domain locations for the measurements are set in the paging monitoring period. For example, the user equipment 101, while in the process of monitoring the paging, simultaneously performs the measurement of the reference signal again at the second time-domain location to obtain the second measurement result.

In some possible implementations, the user equipment 101, according to the second measurement result, adjusts the beam parameter of the uplink transmission beam determined by the first measurement result, to correspond more to a sending situation of the network device 102.

The beam parameter includes a beam width and/or a beam direction.

In embodiments of the present disclosure, in a scenario where DRX is configured for the user equipment 101 and the initial access phase is CG-SDT, the user equipment 101 may perform the measurement of the reference signal in the process of monitoring the paging, determine the uplink transmission beam according to the measurement result, or adjust the beam parameter of the uplink transmission beam, to send CG-SDT, improving the success rate of sending the data.

Embodiments of the present disclosure provide a method for beam management, and the method is performed by the user equipment 101. The method includes steps S701~S704, specifically as follows.

In step S701: in the CG-SDT phase, the user equipment 101 receives a reference signal sent by the network device 102 for at least once.

In step S702, the user equipment 101 measures the reference signal at a first time-domain location, and in response to a first measurement result of the reference signal being greater than or equal to a corresponding threshold, determines the uplink transmission beam according to a downlink reception beam of receiving the reference signal. In a scenario where DRX is configured, the first time-domain location corresponds to a time-domain location for monitoring paging before sending the CG-SDT.

In step S703, the user equipment 101 obtains a second measurement result by measuring the reference signal at a second time-domain location, and adjusts a beam parameter of the uplink transmission beam according to the second measurement result.

In some possible implementations, the second time-domain location may be after sending the CG-SDT. In a scenario where the DRX is configured, the time-domain locations for the measurements such as the second time-domain location are set in the paging monitoring period.

In some possible implementations, when the method does not include step S704, in the sending phase of the subsequent data of the CG-SDT, the user equipment 101 may send the subsequent data using the uplink transmission beam of step S702 or S703, i.e., sending the subsequent data using the same beam as sending the CG-SDT.

In step S704, the user equipment 101 sends the subsequent data based on the uplink transmission beam with the beam parameter adjusted.

The embodiments of the present disclosure may be implemented with reference to the description of the preceding embodiments.

In some possible implementations, the uplink transmission beam with the beam parameter adjusted may refer to a beam after adjusting the uplink transmission beam in step S702. Alternatively, in conjunction with the description of the preceding embodiments, it may be an uplink transmission beam after beam fine-tuning based on the measurement result of the CSI-RS. Alternatively, it is also possible to adjust the beam again after one adjustment in step S703.

In some possible implementations, in step S704, the user equipment 101 may also perform the measurement again in the manner of step S703, adjust the beam involved in step S702 or S703 according to a new measurement result, and then send the subsequent data.

In embodiments of the present disclosure, in a scenario where DRX is configured for the user equipment 101 and the initial access phase is CG-SDT, the user equipment 101 may perform the sending of the subsequent data in a variety of ways: for example, a plurality of measurements of the reference signal may be performed, and the measurement result may be used to adjust the beam parameter; and for another example, it may also use the same beam as sending the CG-SDT. The beam adjustment in the CG-SDT phase is realized to prevent the user equipment 101 from continually initiating the initial access.

Embodiments of the present disclosure provide a method for beam management, and the method is performed by the network device 102. FIG. 8 is a flowchart of a method for beam management illustrated according to an illustrative embodiment; and as illustrated in FIG. 8, the method includes step S801, specifically as follows.

In step S801: in an initial access phase, the network device 102 sends a reference signal to the user equipment 101 for at least once.

In some possible implementations, the initial access phase may be initiated by the user equipment 101. In the initial access process, the user equipment 101 is in an RRC idle state, or an RRC inactive state.

In some possible implementations, the network device 102 may send the reference signal separately at different time-domain locations according to a set sending period T.

In embodiments of the present disclosure, the network device 102 may send the reference signal for a plurality of times to allow the user equipment 101 to perform the measurement of the reference signal in the initial access phase. It is advantageous for the user equipment 101 to select or adjust the beam in conjunction with the measurement of the reference signal, to improve the success rate of sending the data, and prevent initiating the initial access for a plurality of times.

Embodiments of the present disclosure provide a method for beam management, and the method is performed by the network device 102. The method includes step S801', specifically as follows.

In step S801', the network device 102 sends the reference signal to the user equipment at a fourth time-domain location and a fifth time-domain location, the fourth time-domain location corresponds to the first time-domain location, and the fifth time-domain location corresponds to the second time-domain location

In some possible implementations, the fourth time-domain location and the first time-domain location may be, for example, that when the network device 102 sends the reference signal at the fourth time-domain location, after a certain transmission delay and a UE processing delay, the UE may receive the reference signal at the first time-domain location for measurement, or the UE may perform a measurement of the reference signal at the first time-domain location.

Similarly, the fifth time-domain location corresponding to the second time-domain location may be, for example, that when the network device 102 sends the reference signal at the fifth time-domain location, after a certain transmission delay and a UE processing delay, the UE may receive the reference signal at the second time-domain location for measurement, or the UE may perform a measurement of the reference signal at the second time-domain location.

In embodiments of the present disclosure, the network device 102 sends the reference signal at different time-domain locations, and the user equipment 101 may perform a plurality of measurements at the first time-domain location and the second time-domain location to achieve beam adjustment in the initial access phase.

Embodiments of the present disclosure provide a method for beam management, and the method is performed by the network device 102. The method includes step S801 or S801'.

The initial access phase includes one of:
initial access for non-small data (non-SDT); or
random access for small data (RA-SDT).

Embodiments of the present disclosure may be described below in several aspects.

In a first aspect, the implementation may be applied in a scenario of non-SDT or RA-SDT and DRX being not configured for the UE.

In some possible implementations, the first time-domain location is before the user equipment sends msg1; and the second time-domain location is after the user equipment receives the random access response sent by the network device.

This implementation corresponds to the scenario of a plurality of measurements of the reference signal in a non-SDT or RA-SDT scenario, and reference may be made to the description of the previous embodiments, which is not repeated herein.

In some possible implementations, the reference signal includes one of:
a first SSB, or
a CSI-RS having a quasi-co-location relationship with a first SSB.

In some possible implementations, the method includes steps S801~S803.

In step S802: the network device 102 sends a reference signal to the user equipment 101 at a sixth time-domain location after receiving msg3 sent by the user equipment, the sixth time-domain location corresponds to the third time-domain location.

In step S803: the network device 102 receives subsequent data sent by the user equipment 101.

In embodiments of the present disclosure, for a scenario of sending the subsequent data in non-SDT or RA-SDT, reference may be made to the implementation of the preceding embodiments, which will not be repeated herein. With respect to the correspondence of the sixth time-domain location with the third time-domain location, reference may be made to description of the correspondence of the fourth time-domain location with the first time-domain location.

In a second aspect, the implementation may be applied in a scenario of non-SDT or RA-SDT and DRX being configured for the UE.

In some possible implementations, in a scenario where DRX is configured for the user equipment, the first time-domain location corresponds to a time-domain location for the user equipment to monitor paging in the initial access process, and the second time-domain location corresponds to a time-domain location for the user equipment to monitor paging before sending msg3.

This implementation corresponds to an implementation of determining the uplink transmission beam in a scenario of a non-SDT or RA-SDT and DRX being configured, and reference may be made to the description of the previous embodiments, which is not repeated herein.

In some possible implementations, the method includes steps S801, S804, and S805.

In step S804, the network device 102 sends a reference signal to a user equipment 101 in a process of scheduling paging.

In step S805, the network device 102 receives subsequent data sent by the user equipment 101.

In embodiments of the present disclosure, for a scenario of sending the subsequent data in non-SDT or RA-SDT and DRX is configured, reference may be made to the implementation of the preceding embodiments, which will not be repeated herein.

Embodiments of the present disclosure provide a method for beam management, and the method is performed by the network device 102. The method includes step S801 or S801'.

The initial access phase includes: CG-SDT.

In some possible implementations, the first time-domain location is before the user equipment sends the CG-SDT, or
in a scenario where DRX is configured, the first time-domain location corresponds to a time-domain location for the user equipment to monitor paging before sending the CG-SDT.

When DRX is not configured for the UE, the first time-domain location is before the user equipment sends the CG-SDT. When DRX is configured for the UE, the first time-domain location corresponds to a time-domain location for the user equipment to monitor paging before sending the CG-SDT.

For this implementation, reference may be made to the implementation of the determining the uplink transmission beam in a scenario of CG-SDT, which is not repeated herein.

In some possible implementations, the second time-domain location is after the user equipment sends the CG-SDT.

For this implementation, reference may be made to the implementation of sending the subsequent data in a scenario of CG-SDT, which is not repeated herein.

In some possible implementations, the reference signal includes one of:
a second SSB; or
a CSI-RS having a quasi-co-location relationship with a second SSB.

In embodiments of the present disclosure, in the scenario of CG-SDT, the user equipment 101 may perform the beam adjustment through a plurality of measurements to select a suitable uplink transmission beam to send data, so that the success rate of receiving data by the network equipment 102 may be improved to prevent continually restarting the initial access.

For the purpose of describing embodiments of the present disclosure, some specific examples are set forth below.

In a first embodiment, the beam direction and/or beam width of the uplink transmission beam may be adjusted through a plurality of measurements of the reference signal.

### Example 1: a scenario of non-SDT or RA-SDT

The user equipment 101 supporting beam correspondence measures the reference signal, and in a case where a first SSB satisfying a first threshold is obtained by the measurement, may determine an uplink transmission beam based on the downlink reception beam corresponding to the first SSB and the beam correspondence. The uplink transmission beam may be used to send msg1.

The network device 102, upon detecting a preamble on a PRACH resource, may then send a RAR using the transmission beam of its associated SSB.

When the user equipment 101 receives the RAR, the user equipment 101 may again measure the first SSB or the CSI-RS having a QCL-D relationship with the first SSB, adjust the beam direction and/or the beam width of the uplink transmission beam according to the measurement result, and the adjusted beam is used to send msg3 to improve the success rate of sending msg3.

### Example 2: sending of subsequent data in a scenario of non-SDT or RA-SDT

For sending of the subsequent data, the user equipment 101 may send the subsequent data using the same uplink transmission beam (i.e., the same beam parameter) as msg3. The network device 102 may receive the subsequent data using the same beam as receiving msg3.

Alternatively, for sending of the subsequent data, before sending the subsequent data, the user equipment 101 may again measure the first SSB or the CSI-RS having a QCL-D relationship with the first SSB, adjust the beam direction and/or the beam width of the uplink transmission beam according to the measurement result, and the adjusted beam is used to send the subsequent data. Alternatively, when the measurement result satisfies the first threshold, the uplink transmission beam is determined again, to send the subsequent data.

### Example 3: a scenario of CG-SDT

The user equipment 101 supporting beam correspondence measures the reference signal before sending the CG-SDT, and in a case of obtaining a second SSB or CSI-RS having a QCL-D relationship with the second SSB satisfying a second threshold by the measurement, may determine an uplink transmission beam based on the downlink reception beam corresponding to the second SSB and the beam correspondence, to send CG-SDT.

When the reference signal is CSI-RS, the uplink transmission beam may also be fine-tuned in conjunction with the measurement result. When the reference signal is the second SSB, the beam direction and/or beam width of the uplink transmission beam may be adjusted through a plurality of measurements. The adjusted beam sends CG-SDT.

In the sending phase of the subsequent data of the CG-SDT, the user equipment 101 may send the subsequent data using the same beam as sending the CG-SDT, or may again measure the second SSB or the CSI-RS having a QCL-D relationship with the second SSB, and adjust the uplink transmission beam according to the measurement result.

In a second embodiment, the beam direction and/or beam width of the uplink transmission beam is adjusted according to the DRX.

### Example 1: a scenario of non-SDT or RA-SDT

In a scenario where DRX is configured, the user equipment 101 continues to monitor paging in the initiation of the initial access process, and thus the user equipment 101 performs a measurement of the reference signal such as the first SSB or CSI-RS while monitoring paging.

When the user equipment 101 measures to obtain a measurement result of the first SSB or CSI-RS before sending msg3 and in the paging monitoring period, the uplink transmission beam may be determined when the first threshold is satisfied. In conjunction with another measurement result, the uplink transmission beam may be adjusted to send msg3 with the adjusted beam to improve the success rate of sending msg3.

### Example 2: sending of subsequent data in a scenario of non-SDT or RA-SDT

For the sending of subsequent data, the user equipment 101 may likewise measure the first SSB or CSI-RS in the paging monitoring period, and in conjunction with the measurement result, adjust the beam width and/or beam direction of the uplink transmission beam to send the subsequent data.

### Example 3: a scenario of CG-SDT

When sending the CG-SDT, the user equipment 101 may measure the second SSB or the CSI-RS having a QCL-D relationship with the second SSB in the paging monitoring period. The uplink transmission beam is determined according to the measurement result, or the beam width and/or beam direction of the uplink transmission beam is adjusted to improve the success rate of sending the CG-SDT.

In the sending phase of the subsequent data of the CG-SDT, the user equipment 101 may send the subsequent data using the same beam as sending the CG-SDT, or may again measure the second SSB or the CSI-RS having a QCL-D relationship with the second SSB in the paging period, and adjust the uplink transmission beam according to the measurement result.

Based on the same concept as the above method embodiments, embodiments of the present disclosure also provide an apparatus for beam management, which may have the functions of the user equipment 101 in the above method embodiments and may be used to perform the steps provided by the method embodiments described above and performed by the user equipment 101. The functions can be implemented by hardware, by software or by executing the corresponding software through hardware. The hardware or software includes one or more modules corresponding to the functions.

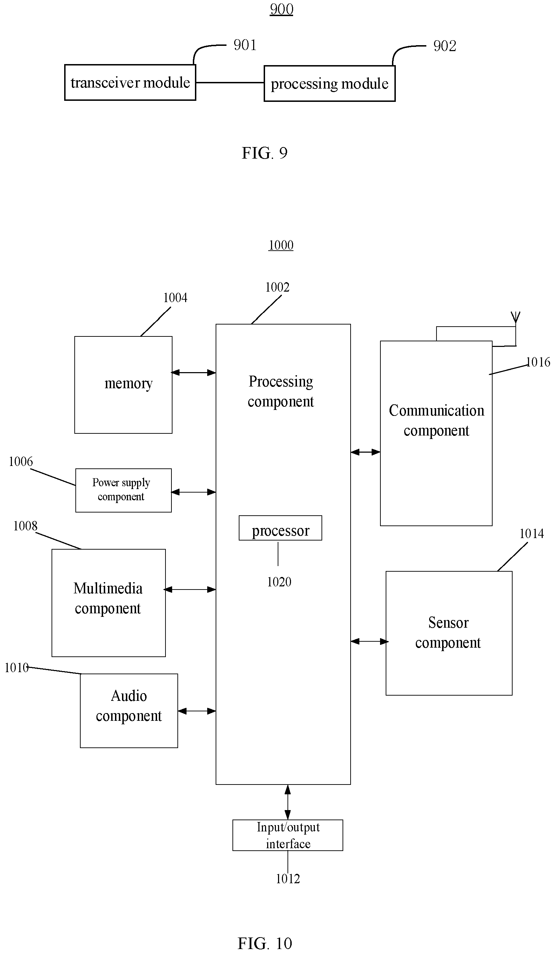

In a possible implementation, the apparatus 900 as illustrated in in FIG. 9 may act as the user equipment 101 involved in the method embodiment described above and perform the steps performed by the user equipment 101 in the method embodiment described above. As illustrated in FIG. 9, the apparatus 900 may include a transceiver module 901 and a processing module 902 coupled to each other, the transceiver module 901 may be used to support the communication device for communication, and the processing module 902 may be used for the communication device to perform a processing operation such as generating information/messages to be sent, or processing received signals to obtain information/messages.

When the steps implemented by the user equipment 101 are performed, the transceiver module 901 is configured to receive a reference signal sent by a network device in an initial access phase for at least once; and
the processing module 902 is configured to determine an uplink transmission beam according to at least one measurement result of the reference signal and beam correspondence.

When the device monitoring the system information is the user equipment 101, its structure may also be as illustrated in FIG. 10. The device 1000 may be a mobile phone, a computer, a digital broadcast terminal, a messaging device, a game console, a tablet device, a medical device, a fitness device, a personal digital assistant, etc.

As illustrated in FIG. 10, the device 1000 may include one or more of the following components: a processing component 1002, a memory 1004, a power supply component 1006, a multimedia component 1008, an audio component 1010, an input/output (I/O) interface 1012, a sensor component 1014, and a communication component 1016.

The processing component 1002 generally controls overall operation of the device 1000, such as operations related to display, call, data communication, camera and record. The processing component 1002 may include one or more processors 1020 to execute instructions, so as to achieve all or a part of steps of the above-described method. Additionally, the processing component 1002 may include one or more modules, facilitating interaction between the processing component 1002 and other components. For example, the processing component 1002 may include a multimedia module, facilitating interaction between the multimedia component 1008 and the processing component 1002.

The memory 1004 is configured to store various types of data to support the operations of the device 1000. Examples of these data include instructions, contact data, telephone book data, messages, pictures, videos, etc. for any application or method operated on the device 1000. The memory 1004 may be realized by any type of volatile, or non-volatile storage devices or combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic or optical disk.

The power supply component 1006 provides power for various components of the device 1000. The power supply component 1006 may include a power management system, one or more power sources, and other components associated with generating, managing and distributing power for the device 1000.

The multimedia component 1008 includes a screen providing one output interface between the device 1000 and the user. In some embodiments, the screen may include a liquid crystal display (LCD), and a touch panel (TP). If the screen includes the touch panel, the screen may be realized as a touch screen, so as to receive an input signal from the user. The touch panel includes one or more touch sensors to sense touch, swipe and gesture on the touch panel. The touch sensor not only can sense the boundary of the touch or swipe action, but also can detect duration time and pressure related to the touch or swipe operation. In some embodiments, the multimedia component 1008 includes a front camera and/or a rear camera. When the device 1000 is in an operation mode, such as in a photographing or video mode, the front camera and/or the rear camera can receive external multimedia data. Each of the front camera and the rear camera may be a fixed optical lens system or has a focal length and optical zoom capability.

The audio component 1010 is configured to output and/or input an audio signal. For example, the audio component 1010 includes a microphone (MIC). The microphone is configured to receive external audio signal when the device 1000 is in the operation mode, such as in a call mode, a record mode and a speech recognition mode. The received audio signal can be further stored in the memory 1004 or transmitted via the communication component 1016. In some embodiments, the audio component 1010 further includes a speaker configured to output the audio signal.

The input/output (I/O) interface 1012 provides interfaces between the processing component 1002 and peripheral interface modules, and the forgoing peripheral interface module may be a keyboard, a click wheel, a button, etc. The button may include but not limited to a homepage button, a volume button, a start button and a lock button.

The sensor component 1014 includes one or more sensors configured to provide state assessments of various aspects of device 1000. For example, the sensor component 1014 may detect on/off state of the device 1000, relative positioning of components. For example, the components may be a display and a keypad of the device 1000. The sensor component 1014 may further detect locational variation of the device 1000 or one component of the device 1000, presence or absence of contact between the user and the device 1000, orientation or acceleration/deceleration of the device 1000 and temperature variation of the device 1000. The sensor component 1014 may include a proximity sensor configured to detect presence of nearby objects without any physical contact. The sensor component 1014 may also include an optical sensor, such as a COMS or CCD image sensor configured to use in an imaging application. In some embodiments, the sensor component 1014 may further include an acceleration sensor, a gyro sensor, a magnetic sensor, a pressure sensor or a temperature sensor.

The communication component 1016 is configured to facilitate wired or wireless communication between the device 1000 and other devices. The device 1000 may access to wireless network based on communication standard, such as WiFi, 2G, or 3G, or combination thereof. In an illustrative embodiment, the communication component 816 receives a broadcast signal or information related to the broadcast from an external broadcast management system through a broadcast channel. In an illustrative embodiment, the communication component 816 further includes a near-field communication (NFC) module to promote short range communication. For example, the NFC module may be realized based on a radio frequency identification (RFID) technology, an infra-red data association (IrDA) technology, an ultra wide band (UWB) technology, a Bluetooth (BT) technology and other technologies.

In an illustrative embodiment, the device 1000 may be realized by one or more application specific integrated circuits (ASICs), digital signal processors (DSPs), digital signal processing equipment (DSPDs), programmable logic devices (PLD), field-programmable gate arrays (FPGA), controllers, microcontrollers, microprocessors or other electronic elements configured to execute the above-described method.

In illustrative embodiments, there is also provided a non-transitory computer-readable storage medium including instructions, such as a memory 1004 including instructions, and the instructions is executable by the processor 1020 of the device 1000 to achieve the method described above. For example, the non-transitory computer readable storage medium may be ROM, random access memory (RAM), CD-ROM, magnetic tape, floppy disks, and optical data storage devices, etc.

Based on the same concept as the above method embodiments, embodiments of the present disclosure also provide an apparatus for beam management, which may have the functions of the network device 102 in the above method embodiments and may be used to perform the steps provided by the method embodiments described above and performed by the network device 102. The functions can be implemented by hardware, by software or by executing the corresponding software through hardware. The hardware or software includes one or more modules corresponding to the functions.

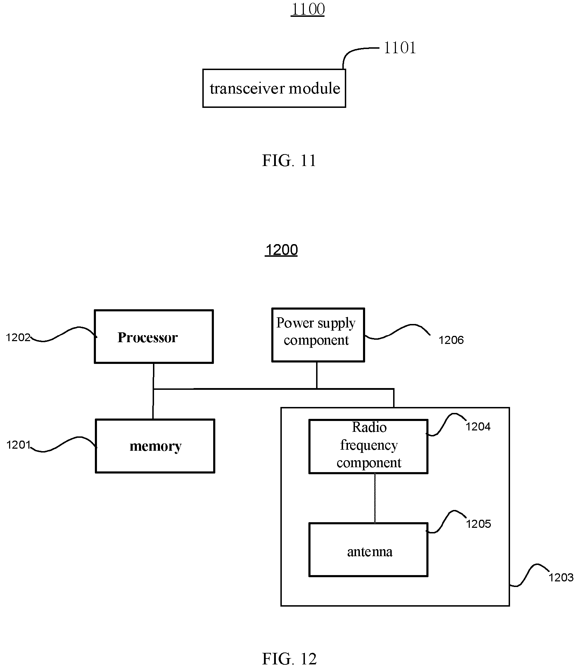

In a possible implementation, the apparatus 1100 as illustrated in FIG. 11 may act as the network device 102 involved in the method embodiment described above and perform the steps performed by the network device 102 in the method embodiment described above. As illustrated in FIG. 11, the apparatus 1100 may include a transceiver module 1101, in which the transceiver module 1101 may be used to support a communication device for communication, and the transceiver module 1101 may have wireless communication function, such as being able to communicate wirelessly with other communication devices through a wireless air interface.

When the steps implemented by the network device 102 are performed, the transceiver module 1101 is configured to send a reference signal to a user equipment in an initial access phase for at least once.

When the communication device is a network device 102, its structure may also be as illustrated in FIG. 12. The structure of the communication device is illustrated using a base station as an example. As illustrated in FIG. 12, the device 1200 includes a memory 1201, a processor 1202, a transceiver component 1203, and a power supply component 1206. The memory 1201 is coupled to the processor 1202 and may be used to store programs and data necessary for the communication device 1200 to implement various functions. The processor 1202 is configured to support the communication device 1200 in performing the corresponding function in the method described above, and the function is realizable by invoking a program stored in the memory 1201. The transceiver component 1203 may be a wireless transceiver that may be used to support the communication device 1200 in receiving signaling and/or data, and transmitting signaling and/or data through a wireless air interface. The transceiver component 1203 may also be referred to as a transceiver unit or a communication unit, and the transceiver component 1203 may include a radio frequency component 1204 and one or more antennas 1205, in which the radio frequency component 1204 may be a remote radio unit (RRU), which may be specifically used for transmission of radio frequency signals and conversion of radio frequency signals to baseband signals, and the one or more antennas 1205 may be specifically used to perform radiation and reception of radio frequency signals.

When the communication device 1200 needs to send data, the processor 1202 may output a baseband signal to a radio frequency unit after baseband processing of the data to be sent, and the radio frequency unit will send the radio frequency signal through an antenna in the form of electromagnetic waves after radio frequency processing of the baseband signal. When there is data sent to the communication device 1200, the radio frequency unit receives the radio frequency signal through the antenna, converts the radio frequency signal into a baseband signal, and outputs the baseband signal to the processor 1202, and the processor 1202 converts the baseband signal into data and processes the data.

Other embodiments of embodiments of the present disclosure will readily occur to a person skilled in the art upon consideration of the specification and practice of the invention disclosed herein. The present disclosure is intended to cover any variations, uses, or adaptations of embodiments of the present disclosure that follow the general principles of embodiments of the present disclosure and include common knowledge or conventional technical means in the art not disclosed by the present disclosure. The specification and embodiments are to be regarded as illustrative only, with the true scope and spirit of embodiments of the present disclosure being indicated by the following claims.

It should be understood that embodiments of the present disclosure is not limited to the precise structures described above and illustrated in the accompanying drawings, and that various modifications and changes may be made without departing from the scope thereof. The scope of embodiments of the present disclosure is limited only by the appended claims.

### Industrial practicality

In the method of the present disclosure, in an initial access phase, a user equipment receives a reference signal sent by a network device, and performs measurement on the reference signal for a plurality of times. The user equipment can reasonably select or adjust an uplink transmission beam based on the beam correspondence in conjunction with each measurement result of the reference signal to ensure that an appropriate uplink transmission beam is used to send information, improving the success rate of the initial access process.

## Claims

1. A method for beam management, performed by a user equipment, comprising:
in an initial access phase, receiving a reference signal sent by a network device for at least once; and
determining an uplink transmission beam according to at least one measurement result of the reference signal and beam correspondence.

2. The method according to claim 1, wherein determining the uplink transmission beam according to the at least one measurement result of the reference signal and the beam correspondence comprises:
measuring the reference signal at a first time-domain location, and in response to a first measurement result of the reference signal being greater than or equal to a corresponding threshold, determining the uplink transmission beam according to a downlink receiving beam of receiving the reference signal; and
obtaining a second measurement result by measuring the reference signal at a second time-domain location, and adjusting a beam parameter of the uplink transmission beam according to the second measurement result.

3. The method according to claim 2, wherein the initial access phase comprises one of:
initial access for non-small data (non-SDT); or
random access for small data (RA-SDT).

4. The method according to claim 3, wherein:
the first time-domain location is before the user equipment sends msg1; and
the second time-domain location is after the user equipment receives a random access response sent by the network device.

5. The method according to claim 4, further comprising:
sending subsequent data based on the uplink transmission beam with the beam parameter adjusted.

6. The method according to claim 4, further comprising:
obtaining a third measurement result by measuring the reference signal at a third time-domain location after sending msg3, adjusting the beam parameter of the uplink transmission beam according to the third measurement result, and sending the subsequent data based on the uplink transmission beam adjusted.

7. The method according to claim 3, wherein in a scenario where discontinuous reception (DRX) is configured:
the first time-domain location corresponds to a time-domain location for the user equipment to monitor paging in the initial access process; and
the second time-domain location corresponds to a time-domain location for monitoring the paging before sending msg3.

8. The method according to claim 7, further comprising:
adjusting the beam parameter of the uplink transmission beam according to a fourth measurement result obtained by measuring the reference signal in a paging monitoring process, and sending the subsequent data based on the uplink transmission beam adjusted.

9. The method according to any one of claims 3 to 8, wherein the reference signal is one of:
a first synchronization signal block (SSB); or
a channel state information reference signal (CSI-RS) having a quasi-co-location relationship with a first SSB.

10. The method according to claim 9, wherein the corresponding threshold of the reference signal is a first threshold.

11. The method according to claim 2, wherein the initial access phase comprises:
uplink configured grant-small data transmission (CG-SDT) based on a physical uplink shared channel (PUSCH).

12. The method according to claim 11, wherein:
the first time-domain location is before sending the CG-SDT.

13. The method according to claim 11, wherein in a scenario where DRX is configured, the first time-domain location corresponds to a time-domain location for monitoring the paging before sending the CG-SDT.

14. The method according to claim 12 or 13, wherein:
the second time-domain location is after sending the CG-SDT, or
sending the subsequent data based on the uplink transmission beam with the beam parameter adjusted.

15. The method according to any one of claims 11 to 14, wherein the reference signal is one of:
a second SSB; or
a channel state information reference signal (CSI-RS) having a quasi-co-location relationship with a second SSB.

16. The method according to claim 15, wherein the corresponding threshold of the reference signal is a second threshold.

17. The method according to any one of claims 2 to 16, wherein the beam parameter comprises a beam width and/or a beam direction.

18. A method for beam management, performed by a network device, comprising:
in an initial access phase, sending a reference signal to a user equipment for at least once.

19. The method according to claim 18, wherein sending the reference signal to the user equipment for at least once comprises:
sending the reference signal to the user equipment at a fourth time-domain location and a fifth time-domain location, wherein the fourth time-domain location corresponds to the first time-domain location, and the fifth time-domain location corresponds to the second time-domain location

20. The method according to claim 19, wherein the initial access phase comprises one of:
initial access for non-small data (non-SDT); or
random access for small data (RA-SDT).

21. The method according to claim 20, wherein:
the first time-domain location is before the user equipment sends msg1; and
the second time-domain location is after the user equipment receives a random access response sent by the network device.

22. The method according to claim 20, further comprising:
sending the reference signal to the user equipment at a sixth time-domain location after receiving msg3 sent by the user equipment, the sixth time-domain location corresponding to the third time-domain location; and
receiving subsequent data sent by the user equipment.

23. The method according to claim 20, wherein in a scenario where DRX is configured for the user equipment:
the first time-domain location corresponds to a time-domain location for the user equipment to monitor paging in the initial access process; and
the second time-domain location corresponds to a time-domain location for the user equipment to monitor the paging before sending msg3.

24. The method according to claim 23, further comprising:
sending the reference signal to the user equipment in a paging scheduling process; and
receiving subsequent data sent by the user equipment.

25. The method according to any one of claims 20 to 24, wherein the reference signal is one of:
a first SSB; or
a CSI-RS having a quasi-co-location relationship with a first SSB.

26. The method according to claim 19, wherein the initial access phase comprises CG-SDT.

27. The method according to claim 26, wherein:
the first time-domain location is before the user equipment sends the CG-SDT, or
in a scenario where DRX is configured, the first time-domain location corresponds to a time-domain location for the user equipment to monitor paging before sending the CG-SDT.

28. The method according to claim 27, wherein the second time-domain location is after the user equipment sends the CG-SDT.

29. The method according to any one of claims 26 to 28, wherein the reference signal is one of:
a second SSB; or
a CSI-RS having a quasi-co-location relationship with a second SSB.

30. An apparatus for beam management, configured in a user equipment, comprising:
a transceiver module configured to receive a reference signal sent by a network device in an initial access phase for at least once; and
a processing module configured to determine an uplink transmission beam according to at least one measurement result of the reference signal and beam correspondence.

31. An apparatus for beam management, configured in a network device, comprising:
a transceiver module configured to send a reference signal to a user equipment in an initial access phase for at least once.

32. A user equipment, comprising a processor and a memory, wherein:
the memory is configured to store a computer program; and
the processor is configured to execute the computer program to implement the method according to any one of claims 1 to 17.

33. A network device, comprising a processor and a memory, wherein:
the memory is configured to store a computer program; and
the processor is configured to execute the computer program to implement the method according to any one of claims 18 to 29.

34. A computer-readable storage medium storing instructions that, when executed by a computer, cause the computer to perform the method according to any one of claims 1 to 17.

35. A computer-readable storage medium storing instructions that, when executed by a computer, cause the computer to perform the method according to any one of claims 18 to 29.
